# EUROPEAN PATENT APPLICATION

(11) **EP 1 419 857 A1**
(43) Date of publication of application: **19.05.2004**
(21) Application number: 03008426.3
(22) Date of filing: 11.04.2003
(51) Int. Cl.: B25J 19/00

(54) **Industrial robot with a balancing device supported in cantilever fashion**

(30) Priority: 14.11.2002 IT TO20020987
(71) Applicant: COMAU SpA, 10095 Grugliasco (Torino) (IT)
(72) Inventor: Amparore, Mauro, 10040 Borgaretto (Torino) (IT); Brunelli, Marco, 10071 Borgaro Torinese (Torino) (IT); Mauletti, Enrico, 10141 Torino (IT)
(74) Representative: Notaro, Giancarlo

(57) **Abstract**

An industrial robot, provided with a balancing cylinder (13), which serves as an aid to the motor for actuating an arm (5) of the robot, which oscillates about a supporting structure (3). The balancing cylinder (13) is supported in cantilever fashion by the aforesaid supporting structure by means of a single oscillating support, which defines an axis of oscillation perpendicular to the axis of the cylinder and is set on one side of the body of the balancing cylinder (13).

## Description

The present invention relates to industrial robots of the type comprising at least one arm, which oscillates with respect to a supporting structure, and a balancing device, which is mounted oscillating on said supporting structure and is connected to the aforesaid oscillating arm. In robots of the type referred to above, the aforesaid balancing device is used for co-operating with the motor for controlling oscillation of the arm, so enabling reduction of the high torque to which the motor may be subjected, above all when the arm is in positions in which the weight exerted thereon presents a large geometrical arm with respect to the axis of oscillation.

Typically, the aforesaid device is a balancing cylinder, which has: a cylindrical body, mounted so that it oscillates on the supporting structure about the aforesaid axis perpendicular to the axis of the cylinder; a piston, mounted so that it is able to slide in the cylindrical body and is recalled towards an end position by elastic means set inside the cylinder; and a stem, connected to the piston and coming out of the cylinder, the outer end of said stem being connected, in an articulated way, to the aforesaid oscillating arm in an area located at a distance from the axis of oscillation of the arm.

When the oscillating arm of the robot is brought into positions that are more demanding for the controlling motor, there occurs at the same time a loading of the elastic means set inside the balancing cylinder, which consequently support at least part of the torque exerted on the axis of oscillation of the arm of the robot.

In robots of the type referred to above so far produced, the body of the balancing cylinder is supported in such a way that it oscillates about the aforesaid axis perpendicular to the axis of the cylinder by means of a pair of fulcra set on the two sides of the cylinder.

The purpose of the present invention is to propose a new type of solution to the problem of the oscillating support of the balancing device.

In order to achieve said purpose, the subject of the invention is an industrial robot which has all the characteristics referred to above and is characterized further in that the aforesaid balancing device is supported in cantilever fashion on said supporting structure by means of a single oscillating support situated on one side of the balancing device.

The above solution enables a much simpler embodiment of the structure which supports the arm and the balancing device (this structure usually being obtained by casting), further simplifies the fabrication of said structure, and also simplifies the assembly operations. The aforesaid conformation and arrangement also gives rise to a visibly appreciable difference of the robot according to the invention with respect to known ones, the aim being to confer originality on the robot also from the standpoint of styling.

Further characteristics and advantages of the invention will emerge clearly from the ensuing description with reference to the annexed drawings, which are provided purely by way of non-limiting example and in which:
- Figure 1 is a schematic view regarding a preferred embodiment of the robot according to the invention;
- Figures 2 and 3 are partial perspective views of the robot according to the invention, which illustrate two end positions of the oscillating arm to which the balancing cylinder forming part of the robot according to the invention is associated; and
- Figure 4 and Figure 5 are a cross-sectional perspective view of the balancing cylinder forming part of the robot according to the invention.

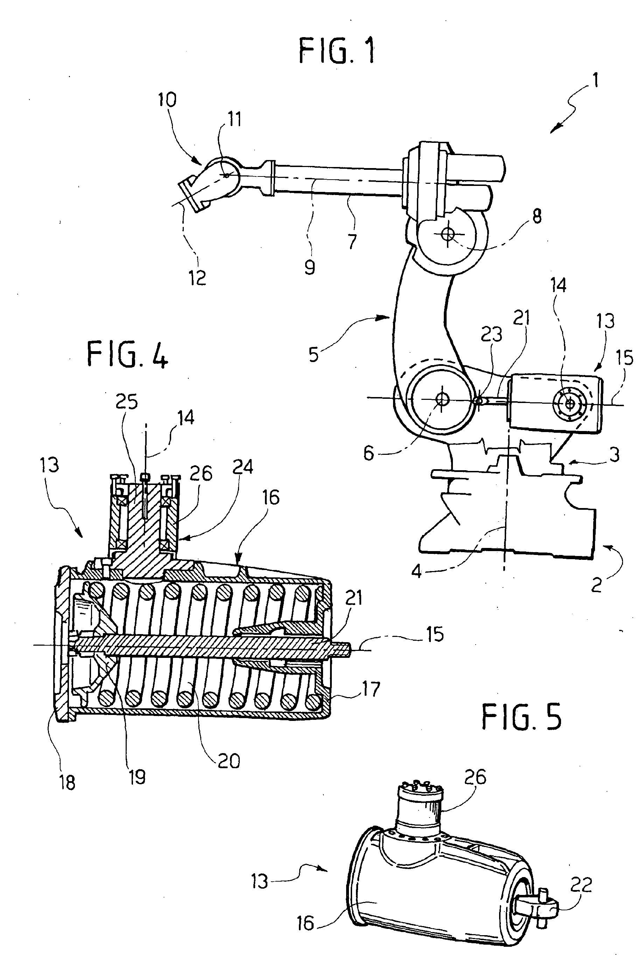

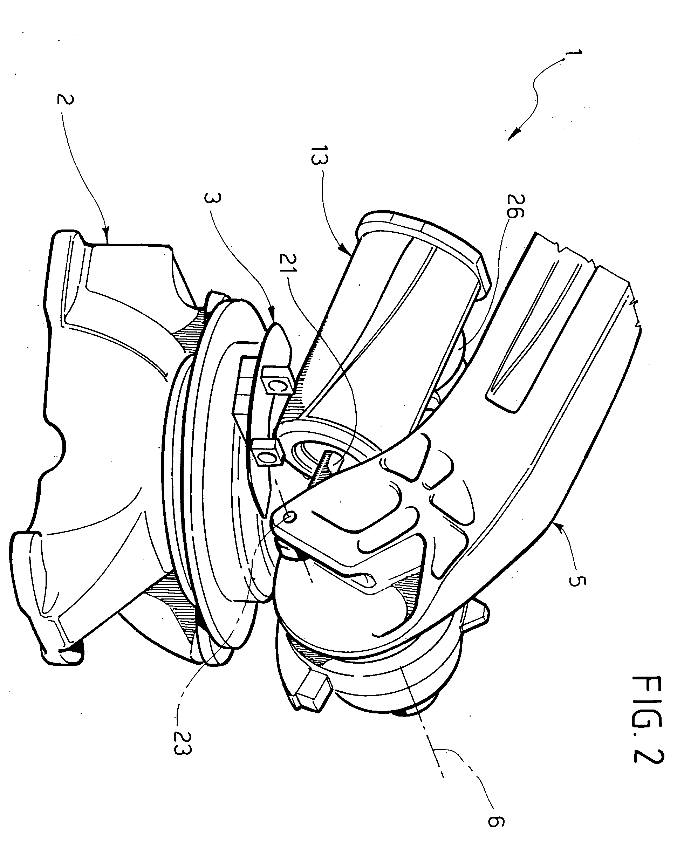

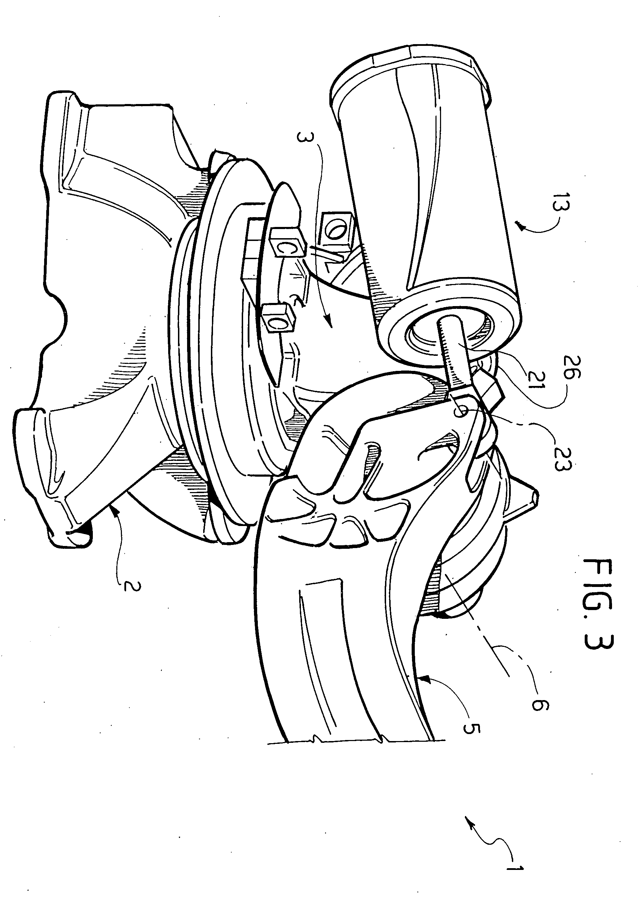

In Figure 1, the reference number 1 designates as a whole an industrial robot which comprises: a base 2; a column 3, mounted so that it can turn on the base 2 about a first axis 4 having a vertical direction; an arm 5, mounted so that it oscillates on the supporting structure constituted by the column 3 about a second axis 6 and in a horizontal direction; a forearm 7, mounted in an articulated way on the arm 5 about a third axis 8, which is also set in a horizontal direction, said arm 5 having moreover the possibility of turning about its axis 9, which consequently constitutes a fourth axis of movement of the robot, and being provided at its end with a wrist 10 with the possibility of rotation about two axes 11, 12 which are perpendicular to one another. According to a technique in itself known, the movement of each of the mobile parts of the robot is controlled by an electric motor (not illustrated) with corresponding gear-reducer transmission (not illustrated either).

In order to reduce the torque to which the motor for bringing about rotation of the arm 5 about the second axis 6 of the robot is subjected, the latter is provided with a balancing cylinder 13, which is mounted oscillating on the supporting structure constituted by the column 3 about an axis 14 orthogonal to the axis of the cylinder 13, which is designated by 15.

With reference to Figures 4 and 5, the cylinder 13 has a cylindrical body 16, which, in the preferred embodiment, is obtained by casting in the form of spheroidal cast iron, is closed at its ends by a first lid 17 made by casting in a single piece with the body of the cylinder 16, and by a second lid 18 applied on the opposite end of the cylinder. Slidably mounted inside the cylinder 13 is a piston 19, which is recalled by a helical spring 20 towards an end position adjacent to the lid 18. Connected to the piston 19 is a stem 21, which is guided so that it is able to slide through the lid 17 and has an end 22 set outside the cylinder, which is connected in an articulated way to the arm 5 (see Figures 2 and 3) about an axis 23 situated at a distance from the axis 6 of articulation of the arm 5.

As may be clearly seen in Figures 2 and 3, which illustrate the arm 5 in two end positions, in which the weight exerted on its distal end has a large geometrical arm with respect to the axis of oscillation 6 (which would lead to a high torque on the actuating motor that controls rotation of the arm 5), the balancing cylinder 13 is in a condition in which the stem 21 is extracted and the spring 20 is consequently compressed. As a result, in both of the critical solutions illustrated in Figures 2 and 3, the spring 20 tends to bring the stem 21 back inside the cylinder, thus co-operating with the action of the electric actuating motor in countering the resistant torque due to the weights exerted on the arm 5. In any further position of the arm 5 intermediate between the two end positions illustrated, the balancing cylinder 13 sets itself in an intermediate angular position between the two positions illustrated in Figures 2 and 3, with the stem 21 consequently set further inside the cylinder. In the resting situation, which is the one illustrated in Figure 1, where the arm 5 extends substantially in a vertical direction, the axis of oscillation 6, the axis of articulation 23 of the stem 21, and the axis of oscillation 14 of the balancing cylinder are substantially aligned in one and the same horizontal plane (Figure 1) so that the stem comes to be in the completely retracted condition illustrated in Figure 4.

As already described above, according to the invention, the balancing cylinder 13 is supported in cantilever fashion on the supporting structure constituted by the column 3 by means of a single oscillating support 24 set on one side of the body of the cylinder. This differentiates the robot according to the invention from robots according to the prior art, where the balancing cylinder is mounted oscillating on two fulcra set on the two sides of its body.

With reference once again to Figure 4, connected to the body of the cylinder 13 is a transverse cylindrical shaft 25, which is mounted oscillating by means of rolling bearings in a bushing 26, which is designed to be fixed by means of screws to the supporting structure constituted by the column 3.

Thanks to the conformation described above of the balancing cylinder, with a single oscillating support 24 mounted on just one side thereof, the fabrication by casting of the body of the column 3 of the robot is decidedly simpler, as likewise simpler are the subsequent production and assembly operations.

In addition, the aforesaid constructional arrangement bestows on the robot an aesthetically original appearance different from the robots built so far.

Of course, without prejudice to the principle of the invention, the details of construction and the embodiments may vary widely with respect to what is described and illustrated herein purely by way of example, without thereby departing from the scope of the present invention.

## Claims

1. An industrial robot, comprising: at least one oscillating arm (5), which oscillates with respect to a supporting structure (3); and a balancing device (13), mounted oscillating on said supporting structure (3) and connected to the aforesaid oscillating arm (5),
**characterized in that** said balancing device (13) is supported in cantilever fashion on said supporting structure (3) by means of a single oscillating support (24) set on one side of the balancing device.

2. The robot according to Claim 1, **characterized in that** said balancing device is of the type, in itself known, comprising a cylinder, which has: a cylindrical body (16) mounted oscillating about an axis (14) perpendicular to the axis (15) of the cylinder; a piston (19), mounted so that it is able to slide in the cylindrical body (16) and is recalled towards an end position by elastic means (20) set inside the cylinder (13); and a stem (21), connected to the piston (19) and coming out of the cylinder (13), said stem (21) having its free end (22) connected in an articulated way to the aforesaid oscillating arm (5) in an area (23) set at a distance from the axis (6) of oscillation of the aforesaid arm (5).

3. The robot according to Claim 2, **characterized in that** the arrangement is such that when the aforesaid oscillating arm (5) is substantially vertical, the axis (6) of oscillation of the arm (5), the axis (23) of articulation of the stem of the balancing cylinder (13) with respect to the arm (5), and finally the axis of oscillation (14) of the balancing cylinder are substantially parallel and aligned on one and the same plane, and the aforesaid stem is in its retracted position inside the cylinder, whereas when the aforesaid oscillating arm (5) is in its two end positions rotated about the aforesaid axis of oscillation (6), the stem (21) is in a position extracted from the balancing cylinder.

4. The robot according to Claim 2, **characterized in that** the aforesaid oscillating arm (5) has a slightly curved general shape, in order to prevent interference with said balancing cylinder in one of the two end positions of said oscillating arm.

5. The robot according to Claim 2, **characterized in that** said supporting structure is constituted by a column of the robot mounted oscillating about a vertical axis (4) on a base (2) of the robot, said column (3) having a top portion which defines the oscillation supports of the oscillating arm (5) and of the balancing cylinder (13), said supports having the respective axes of oscillation (6, 14) set parallel to one another and substantially in one and the same horizontal plane.

6. The robot according to Claim 5, **characterized in that** when the aforesaid oscillating arm (5) is in the upright condition, the aforesaid axis (23) of articulation of the stem (22) of the balancing cylinder with respect to the oscillating arm (5) is in an intermediate position between the axis of oscillation of the arm (5) and the axis of oscillation of the balancing cylinder (13), said axis of articulation (23) being parallel to said axes of oscillation (6, 14).

7. The robot according to any one of preceding claims, **characterized in that** the body of the balancing cylinder has a transverse cylindrical shaft (25) projecting outwards, which is mounted by means of rolling bearings within a supporting bushing (26), which can be fixed to the aforesaid supporting structure (3).
